# EUROPÄISCHE PATENTSCHRIFT

(11) **EP 3 079 975 B1**
(45) Veröffentlichungstag und Bekanntmachung des Hinweises auf die Patenterteilung: **28.02.2018**
(21) Anmeldenummer: 14806612.9
(22) Anmeldetag: 02.12.2014
(51) Int. Cl.: B62D 29/04, B62D 23/00

(54) **TRÄGERKONSTRUKTION IN FACHWERKBAUWEISE UND VERFAHREN ZU DEREN HERSTELLUNG**
SUPPORT STRUCTURE WITH A FRAMEWORK DESIGN, AND METHOD FOR PRODUCING SAME
CONSTRUCTION PORTEUSE EN TREILLIS ET SON PROCÉDÉ DE FABRICATION

(30) Priorität: 13.12.2013 DE 102013225909
(43) Veröffentlichungstag der Anmeldung: 19.10.2016
(73) Patentinhaber: Bayerische Motoren Werke Aktiengesellschaft, 80809 München (DE)
(72) Erfinder: STEBER, Gerhard, 80796 München (DE)
(86) Internationale Anmeldenummer: PCT/EP2014/076255
(87) Internationale Veröffentlichungsnummer: WO 2015/086378

(56) Entgegenhaltungen:
- EP-A1- 2 360 082
- EP-A1- 2 511 084
- WO-A1-2012/079693
- DE-C1- 4 423 642

## Beschreibung

Die vorliegende Erfindung betrifft eine Trägerkonstruktion in Fachwerkbauweise, und insbesondere eine Trägerkonstruktion eines Achsträgers eines Kraftfahrzeugs, und ein entsprechendes Verfahren zu deren Herstellung.

Die DE 44 23 642 C1 offenbart eine Trägerkonstruktion gemäß dem Oberbegriff von Anspruch 1. Weiterer Stand der Technik wird durch die WO 2012/079693 A1 gebildet.

Eine Trägerkonstruktion in Fachwerkbauweise umfasst eine Vielzahl von Stäben, wobei die beiden Enden eines jeden Stabs an jeweiligen Fachwerkknoten bzw. Knotenpunkten an anderen Stäben bzw. an entsprechenden Enden der anderen Stäbe anliegen und mittels eines geeigneten Verbindungselements an den anderen Stäben befestigt sind.

Die Befestigung kann im Falle der Verwendung von Metall als Material für die Stäbe beispielsweise durch Verschweißen erfolgen. Des Weiteren können die Stäbe mittels Verschraubungen, Nieten oder unter Verwendung eines Verbindungselements, welches gebogene Abschnitte aufweist, die die zu verbindenden Stäbe zumindest teilweise umschließen, und die an den Stäben mittels eines Klebstoffs befestigt sind, aneinander befestigt sein. Im Falle der Verwendung eines Klebstoffs zum Verbinden der Stäbe mit den gebogenen Abschnitten des Verbindungselements müssen jedoch große Flächen des Verbindungselements als Klebeflächen vorgesehen werden, um eine ausreichende Stabilität der Trägerkonstruktion zu erreichen, was zu einer Erhöhung des Gewichts der Trägerkonstruktion führt.

Zur Gewichtsreduzierung und somit zur Verringerung des Kraftstoffverbrauchs eines Kraftfahrzeugs werden in
zunehmendem Maße in der Automobilindustrie Bauteile in Leichtbauweise verwendet. Beispielsweise können als Material für die Stäbe eines Achsträgers faserverstärkte Kunststoffe verwendet werden. Dabei kann es jedoch insbesondere bei Verwendung von Kohlenstofffasern als Faserbestandteil des
faserverstärkten Kunststoffs in Verbindung mit Aluminium aufgrund des sehr hohen elektrischen Potentials zwischen diesen beiden Materialien zu einer Korrosion des Aluminiummaterials kommen. Des Weiteren sind bei der Verwendung von Verschraubungen, um die Enden der Stäbe an den Knotenpunkten zu verbinden, aufwändige Montagen erforderlich, wodurch die zur Herstellung des Achsträgers benötigte Produktionszeit und somit die Herstellungskosten erhöht werden.

Es ist eine Aufgabe der Erfindung, eine Trägerkonstruktion in Fachwerkbauweise und ein Verfahren zu deren Herstellung anzugeben, mit denen die Herstellungskosten bei gleichzeitiger Reduzierung des Gewichts der Trägerkonstruktion verringert werden können.

Diese Aufgaben werden durch eine Trägerkonstruktion in Fachwerkbauweise gemäß Anspruch 1 und ein Verfahren zur Herstellung einer Trägerkonstruktion in Fachwerkbauweise gemäß Anspruch 13 gelöst.

Bevorzugte Ausführungsformen der Erfindung sind Gegenstand der Unteransprüche.

Eine erfindungsgemäße Trägerkonstruktion in Fachwerkbauweise umfasst einen ersten und einen zweiten Stab eines Achsträgers eines Kraftfahrzeugs, ein Positionierungselement, und eine erste und eine zweite Faserwicklung, wobei das Positionierungselement eine Ausrichtung des ersten Stabs relativ zu einer Ausrichtung des zweiten Stabs festlegt, und ein erster Auflageabschnitt des Positionierungselements durch die erste Faserwicklung in Richtung eines Auflageabschnitts des ersten Stabs gezogen wird, und ein zweiter Auflageabschnitt des Positionierungselements durch die zweite Faserwicklung in Richtung eines Auflageabschnitts des zweiten Stabs gezogen wird, um den ersten und den zweiten Stab in der festgelegten relativen Ausrichtung zueinander mittels Reibschluss zu haltern.

Durch die Verwendung von Faserwicklungen zum Verbinden der Stäbe kann im Falle der Verwendung von Stäben aus einem nichtmetallischen Material die Gefahr einer Korrosion von Elementen der Trägerkonstruktion ausgeschlossen werden. Des Weiteren können die Produktionszeit und somit die Herstellungskosten der Trägerkonstruktion verringert werden, da aufwändige Montagen wie bei der Verwendung von Nieten zur Befestigung entfallen. Ferner kann das Gewicht im Vergleich zu bisherigen bekannten Klebeverbindungen reduziert werden, da aufgrund des Vorsehens der Faserwicklungen keine großflächigen Klebeflächen an den Stäben erforderlich sind. Aufgrund der nicht erforderlichen großflächigen Klebeflächen an den Stäben können diese beispielsweise kostengünstig mittels eines Strangzieh- bzw. Pultrusionsverfahrens gefertigt werden.

Gemäß einer Ausführungsform können der erste und der zweite Auflageabschnitt des Positionierungselements eine jeweilige Führungseinrichtung aufweisen, durch welche die erste und die zweite Faserwicklung jeweils geführt werden. Dabei sind die Führungseinrichtungen bevorzugt derart gestaltet, dass die Faserwicklungen auf geodätischen Linien verlaufen. Dadurch kann die Stabilität der Trägerkonstruktion erhöht werden, da die Faserwicklungen nicht abrutschen können, was zu einer Instabilität der Verbindungen führen würde.

Bevorzugt sind der erste Auflageabschnitt des Positionierungselements an dem Auflageabschnitt des ersten Stabs, und der zweite Auflageabschnitt des Positionierungselements an dem Auflageabschnitt des zweiten Stabs ferner mittels einer stoffschlüssigen Verbindung befestigt.

Die stoffschlüssige Verbindung sorgt bereits vor dem Anbringen der Faserwicklungen dafür, dass die relative Ausrichtung der Stäbe festgelegt ist, wodurch das Anbringen der Faserwicklungen erleichtert wird. Des Weiteren wird die Stabilität der Trägerkonstruktion durch das Vorsehen der stoffschlüssigen Verbindungen weiter erhöht.

Die stoffschlüssigen Verbindungen können durch jeweilige zwischen dem ersten Auflageabschnitt des Positionierungselements und dem Auflageabschnitt des ersten Stabs, und dem zweiten Auflageabschnitt des Positionierungselements und dem Auflageabschnitt des zweiten Stabs vorgesehene Klebstoffe erfolgen.

Gemäß einer Ausführungsform nimmt ein Abstand zwischen einem an einen freiliegenden Abschnitt des ersten Stabs anschließenden Endabschnitts des Positionierungselements in Richtung eines anderen Endabschnitts des Positionierungselements stetig oder stufenweise bis zu einem im Wesentlichen konstanten Wert ab.

Durch diese Ausgestaltung können Kerbwirkungen verbessert und Spitzenspannungen abgeschwächt werden.

Des Weiteren kann im Anschluss an den Endabschnitt des Positionierungselements ein überstehender, aus Klebstoff bestehender Wulst ausgebildet sein, um die Spitzenspannungen weiter abzuschwächen.

Bevorzugt ist das Positionierungselement als eine Halbschale ausgebildet, deren dem Auflageabschnitt des ersten Stabs zugewandte Oberfläche auf dem Auflageabschnitt des ersten Stabs formschlüssig aufliegt.

Durch diesen Formschluss wird eine weitere Erhöhung der Stabilität der Trägerkonstruktion erreicht.

Bei einer anderen Ausführungsform kann das Positionierungselement als Lasche ausgebildet sein, wobei der erste Auflageabschnitt und der zweite Auflageabschnitt des Positionierungselements durch einen gebogenen Abschnitt verbunden sind. Dabei legt die Krümmung des gebogenen Abschnitts einen Winkel fest, den der erste und der zweite Stab miteinander einschließen.

Die Faserwicklungen können zumindest eine Faser ausgewählt aus einer Kohlenstofffaser, einer Glasfaser, einer Aramidfaser und einer Naturfaser umfassen.

Dabei kann die zumindest eine Faser in einen Matrixwerkstoff ausgewählt aus einem thermoplastischen Matrixwerkstoff und einem duroplastischen Matrixwerkstoff eingebettet sein.

Weiterhin können der erste Stab und/oder der zweite Stab einen faserverstärkten Kunststoff oder ein Metall umfassen, und das Positionierungselement kann aus einem Kunststoff, einem faserverstärkten Kunststoff oder aus einem Metall gebildet sein.

Bevorzugt sind der erste und der zweite Stab und das Positionierungselement aus einem faserverstärkten Kunststoff ausgebildet, wobei es sich bei den Faserwickelungen jeweils um eine aus einer Kunststofffaser ausgebildete Faserwickelung handelt.

Durch diese materialmäßige Ausgestaltung der entsprechenden Elemente der erfindungsgemäßen Trägerkonstruktion tritt keine Korrosion auf und darüber hinaus können der erste und der zweite Stab, das Positionierungselement und die Faserwickelungen so ausgestaltet werden, dass sie gleiche oder ähnliche Wärmeausdehnungskoeffizienten aufweisen.

Ein Verfahren zur Herstellung einer Trägerkonstruktion in Fachwerkbauweise umfasst ein Anordnen eines ersten Auflageabschnitts eines Positionierungselements auf einem Auflageabschnitt eines ersten Stabs eines Achsträgers eines Kraftfahrzeugs, ein Anordnen eines zweiten Auflageabschnitts des Positionierungselements auf einem Auflageabschnitt eines zweiten Stabs eines Achsträgers eines Kraftfahrzeugs, ein Verbinden des ersten Auflageabschnitts des Positionierungselements mit dem Auflageabschnitt des ersten Stabs durch eine Faserwicklung, welche den ersten Auflageabschnitt des Positionierungselements in Richtung des Auflageabschnitts des ersten Stabs zieht, und ein Verbinden des zweiten Auflageabschnitts des Positionierungselements mit dem Auflageabschnitt des zweiten Stabs durch eine weitere Faserwicklung, welche den zweiten Auflageabschnitt des Positionierungselements in Richtung des Auflageabschnitts des zweiten Stabs zieht, um den ersten und den zweiten Stab in einer festgelegten relativen Ausrichtung zueinander mittels Reibschluss zu haltern.

Der erste und der zweite Auflageabschnitt des Positionierungselements können eine jeweilige Führungseinrichtung aufweisen, wobei Abschnitte der ersten und der zweiten Faserwicklung jeweils in die entsprechende Führungseinrichtung eingelegt werden.

Ferner können der erste Auflageabschnitt des Positionierungselements an dem Auflageabschnitt des ersten Stabs, und der zweite Auflageabschnitt des Positionierungselements an dem Auflageabschnitt des zweiten Stabs mittels einer stoffschlüssigen Verbindung befestigt werden.

Zur Herstellung der stoffschlüssigen Verbindungen können jeweilige Klebstoffe zwischen dem ersten Auflageabschnitt des Positionierungselements und dem Auflageabschnitt des ersten Stabs, und dem zweiten Auflageabschnitt des Positionierungselements und dem Auflageabschnitt des zweiten Stabs vorgesehen werden.

Bevorzugt nimmt ein Abstand zwischen einem an einen freiliegenden Abschnitt des ersten Stabs anschließenden Endabschnitts des Positionierungselements in Richtung eines anderen Endabschnitts des Positionierungselements stetig oder stufenweise bis zu einem im Wesentlichen konstanten Wert ab.

Ferner kann im Anschluss an den Endabschnitt des Positionierungselements ein überstehender, aus Klebstoff bestehender Wulst ausgebildet werden.

Bevorzugt wird das Positionierungselement als Halbschale ausgebildet, deren dem Auflageabschnitt des ersten Stabs zugewandte Oberfläche auf dem Auflageabschnitt des ersten Stabs formschlüssig aufgelegt wird.

Gemäß einer anderen Ausführungsform wird das Positionierungselement als Lasche ausgebildet, wobei der erste Auflageabschnitt und der zweite Auflageabschnitt des Positionierungselements durch einen gebogenen bzw. gekrümmten Abschnitt verbunden sind.

Die Faserwicklungen können zumindest eine Faser ausgewählt aus einer Kohlenstofffaser, einer Glasfaser, einer Aramidfaser und einer Naturfaser umfassen.

Des Weiteren kann die zumindest eine Faser in einen Matrixwerkstoff ausgewählt aus einem thermoplastischen Matrixwerkstoff und einem duroplastischen Matrixwerkstoff eingebettet sein.

Der erste Stab und/oder der zweite Stab können einen faserverstärkten Kunststoff oder ein Metall umfassen, oder vollständig aus einem faserverstärkten Kunststoff oder einem Metall gebildet sein, während das Positionierungselement aus einem Kunststoff, einem faserverstärkten Kunststoff oder aus einem Metall gebildet werden kann.

Im Folgenden werden anhand der zugehörigen Zeichnungen Ausführungsformen der Erfindung näher beschrieben. Es zeigen:
Fig. 1 eine Ausführungsform einer Trägerkonstruktion in Fachwerkbauweise am Beispiel eines Hinterachsträgers eines Kraftfahrzeugs,
Fig. 2A und 2B Detailansichten eines Fachwerkknotens, in dem die Enden von drei Stäben zusammentreffen,
Fig. 3 eine weitere Ausführungsform eines Fachwerkknotens,
Fig. 4 eine weitere Ausführungsform eines Fachwerkknotens in Form eines T-Stoßes, und
Fig. 5 eine Ansicht zur Veranschaulichung der Verbindung eines Positionierungselements mit Stäben.

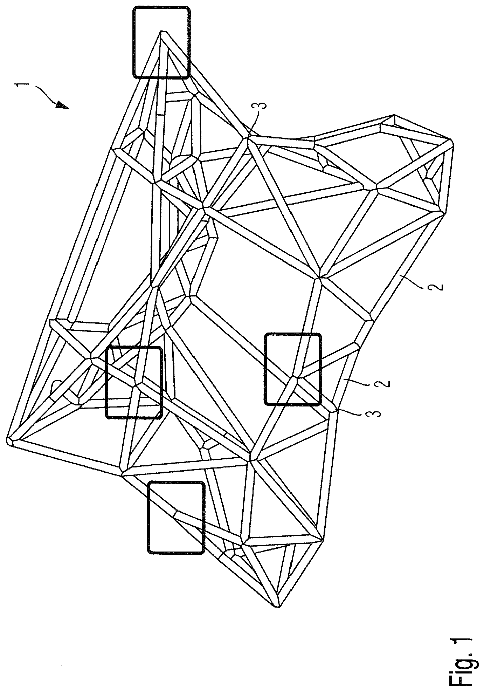

Fig. 1 veranschaulicht eine Ausführungsform einer Trägerkonstruktion in Fachwerkbauweise am Beispiel eines Hinterachsträgers eines Kraftfahrzeugs. Die Trägerkonstruktion 1 umfasst eine Vielzahl von Stäben 2, welche als Rohre bzw. Profile ausgebildet sein können. Die beiden Enden jedes Stabs liegen in einem jeweiligen Knotenpunkt 3 (einige Knotenpunkte sind durch ein jeweiliges Rechteck in Fig. 1 gekennzeichnet) an einem Ende eines anderen Stabs 2 bzw. an Enden von mehreren Stäben 2 oder an einem Abschnitt eines anderen durchlaufenden Stabs 2 an. Dabei ist jeder der Stäbe 2 ein Bestandteil eines Faches, also eines Drei- oder Mehrecks aus Stäben 2. Aufgrund dieser Anordnung der Stäbe 2 entstehen in den einzelnen Elementen im Wesentlichen nur Druck- und Zugkräfte, woraus eine hohe Tragfähigkeit der Trägerkonstruktion resultiert.

Die Stäbe 2 können beispielsweise ein Metall, wie etwa Aluminium oder einen faserverstärkten Kunststoff umfassen, oder vollständig aus einem Metall oder einem faserverstärkten Kunststoff gebildet sein. Im Falle der Verwendung eines faserverstärkten Kunststoffs bzw. eines Faserverbundwerkstoffs als Material für die Stäbe 2 können als Matrix sowohl duroplastische als auch thermoplastische Materialien verwendet werden, wobei als Fasern Kohlenstofffasern, Glasfasern, Aramidfasern, Naturfasern, etc. eingesetzt werden können. Gemäß einer Ausführungsform können die einen faserverstärkten Kunststoff umfassenden Stäbe 2 mittels eines Strangziehverfahrens bzw. Pultrusionsverfahrens zur Fertigung von faserverstärkten Kunststoffprofilen hergestellt werden.

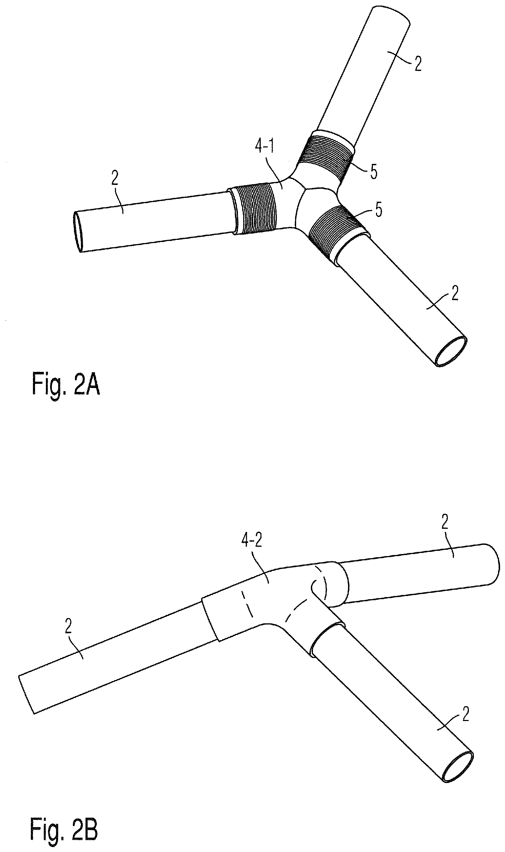

Die Fig. 2A und 2B veranschaulichen Detailansichten aus unterschiedlichen Blickwinkeln des in Fig. 1 dargestellten Achsträgers, bei denen in einem Knotenpunkt 3 die Enden dreier Stäbe 2 aufeinandertreffen, wobei in Fig. 2B die in Fig. 2A gezeigten Faserwicklungen 5 und Trennfugen nicht dargestellt sind. Zur Festlegung einer relativen Ausrichtung der einzelnen Stäbe 2 zueinander bzw. zur Festlegung der jeweiligen Winkel, welche die zu verbindenden Stäbe 2 miteinander einschließen, sind als Halbschalen ausgebildete Positionierungselemente 4-1, 4-2 an den Enden der jeweiligen zu verbindenden Stäbe 2 vorgesehen, und liegen auf diesen zumindest abschnittsweise, d.h. auf Auflageabschnitten der Stäbe 2, auf. Dabei sind die den jeweiligen Enden der Stäbe 2 zugewandten Oberflächen der auf den Enden der Stäbe 2 aufliegenden Abschnitte der Positionierungselemente 4-1, 4-2 an die Querschnitte bzw. Umfänge der entsprechenden Abschnitte der Stäbe 2 angepasst, um die relative Ausrichtung der einzelnen Stäbe 2 im befestigten Zustand festzulegen. Im vorliegenden Fall entspricht die Krümmung der Oberflächen der auf den Enden der Stäbe 2 aufliegenden Abschnitte der Positionierungselemente 4-1, 4-2 im Wesentlichen dem Krümmungsradius der Stäbe 2. In anderen Ausführungsformen können auch Stäbe 2 mit einem rechteckigen Profil oder einem andersartig ausgebildeten Querschnitt verwendet werden, wobei die aufliegenden Abschnitte der Positionierungselemente 4-1, 4-2 entsprechend angepasst sind, um eine formschlüssige Verbindung zu bilden. Bevorzugt sind beide Positionierungselemente 4-1, 4-2 einstückig ausgebildet, gegebenenfalls kann jedoch auch ein einstückiges und ein mehrteiliges Positionierungselement 4-1, 4-2 in Kombination verwendet werden, um die relative Ausrichtung der Stäbe 2 zueinander festzulegen.

Zur Positionierung der Positionierungselemente 4-1, 4-2 bzw. zum Zusammenbau der Trägerkonstruktion können diese mittels einer stoffschlüssigen Verbindung, beispielsweise mittels eines Klebstoffs mit den Enden bzw. den Auflageabschnitten der Stäbe 2 verbunden werden. Es sind aber auch Ausführungsformen des Hinterachsträgers 1 möglich, bei denen kein separater Klebstoff verwendet wird. Als Klebstoffe zur Verbindung der Positionierungselemente 4 mit den Stäben eignen sich insbesondere Klebstoffe welche ein Elastizitätsmodul mit einem Wert größer als 100 MPa aufweisen, um den Anforderungen hinsichtlich der Steifigkeit des Hinterachsträgers 1 zu genügen.

Mittels vorgespannter Faserwicklungen 5, die zumindest auf Teilbereichen der auf den Enden der Stäbe 2 aufliegenden Abschnitte der Positionierungselemente 4-1, 4-2 bzw. auf Teilbereichen der Auflageabschnitten der Positionierungselemente 4-1, 4-2 aufliegen, werden die Positionierungselemente 4-1, 4-2 in Richtung der jeweiligen Auflageabschnitte der Stäbe 2, auf denen die Positionierungselemente 4-1, 4-2 aufliegen, gepresst bzw. gezogen, wodurch die Stäbe 2 in der festgelegten relativen Ausrichtung zueinander zusätzlich mittels Reibschluss gehaltert werden. Durch diese zusätzlich Haltekraft aufgrund des Reibschlusses kann die erforderliche Klebefläche im Vergleich zu den bisher bekannten, lediglich eine Klebverbindung umfassenden Trägerkonstruktionen verringert werden, wodurch eine deutliche Gewichtsreduzierung mittels der erfindungsgemäßen Trägerkonstruktion erzielt werden kann.

Die Faserwicklungen 5 können aus einer oder mehreren Einzelfasern ausgebildet sein, die jeweils einmal oder mehrmals um einen Endabschnitt eines Stabs 2 und den darauf aufliegenden Auflageabschnitt des Positionierungselements 4-1, 4-2 gewickelt sind. Die einzelnen Faserwicklungen 5 sind dabei jeweils insbesondere derart angeordnet, dass sie einen jeweiligen Endabschnitt eines jeweiligen Stabs 2 umschließen.

Die Faserwicklungen 5 können eine Kohlenstofffaser, eine Glasfaser, eine Aramidfaser oder eine Naturfaser sowie eine Kombination von diesen umfassen. Des Weiteren können als Faserwicklung 5 trockene Fasern oder nasse, das heißt mit Harz getränkte Fasern mit oder ohne Bindersystem eingesetzt werden, wobei als Harzsystem Duroplasten oder Thermoplasten verwendet werden können.

Die Positionierungselemente 4 können beispielsweise einen faserverstärkten Kunststoff und/oder ein Metall umfassen. Im Falle eines Positionierungselements 4 aus einem faserverstärkten Kunststoff kann dieses beispielsweise mittels eines Spritzgussverfahrens unter Verwendung kurzer Fasern, eines Nasspressverfahrens, eines Spritzpressen unter Verwendung von Faserhalbzeugen (Preform) oder unter Verwendung von plattenförmigen Teigmassen aus duroplastischen Reaktionsharzen und/ oder thermoplastischen Harzen und Fasern wie etwa Glasfasern, Karbonfasern, Aramidfasern, Naturfasern oder sonstigen Fasern hergestellt werden.

Um eine Beschädigung der Faserwicklung 5 zu vermeiden, sind die Abschnitte der Positionierungselemente 4, auf denen die Faserwicklung 5 aufliegt, bevorzugt glatt, d.h. ohne scharfe Kanten ausgeführt. Ferner können, um eine exakte Positionierung der Faserwicklung 5 zu ermöglichen, die Abschnitte, auf denen die Faserwicklung 5 aufliegt, in Richtung der Faserwicklung 5 verlaufenden Führungseinrichtungen aufweisen, die beispielsweise durch Rillen oder Vertiefungen gebildet sind, um die Faserwicklung 5 zu führen. Bevorzugt sind die Führungseinrichtungen derart eingerichtet, dass sie die Faserwicklungen 5 entlang geodätischer Linie führt, wodurch ein Abrutschen der Faserwicklungen verhindert wird und somit zu einer Erhöhung der Stabilität der Trägerkonstruktion führt.

Im dargestellten Ausführungsbeispiel schließen die drei zu verbindenden Stäbe 2 jeweils denselben Winkel mit dem benachbarten Stab 2 ein. Bei anderen Ausführungsformen können die benachbarten Stäbe 2 jedoch auch unterschiedliche Winkel einschließen. Weiterhin können die drei zu verbindenden Stäbe 2 alle in einer Ebene liegen, oder einer der Stäbe 2 kann auch nicht in der durch die beiden anderen Stäbe 2 aufgespannten Ebene liegen.

Bei einer anderen Ausführungsform kann auch lediglich eine der Halbschalen 4-1, 4-2 verwendet werden, welche mittels der Faserwicklungen 5 in ähnlicher Weise wie in den Fig. 2A und 2B dargestellt an den Stäben 2 befestigt ist. Um eine ausreichende Stabilität der entsprechenden Trägerkonstruktion zu erreichen, wird in diesem Fall die Faserwicklung 5 bevorzugt auf einem sich entlang der Längsrichtung des Stabs 2 erstreckenden größeren Abschnitt des Halbschale 4-1, 4-2 auf- bzw. abgelegt.

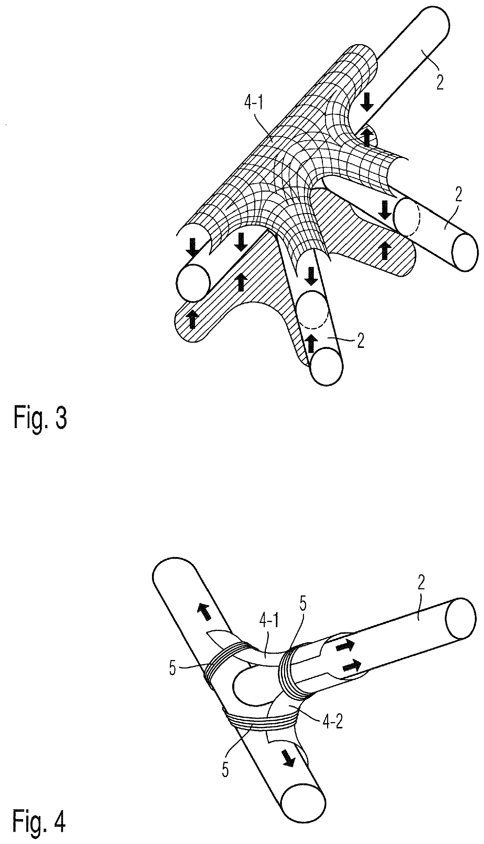

Fig. 3 veranschaulicht eine schematische Ansicht eines Zusammenfügens der Stäbe 2 und einer Halbschale 4-1 eines Knotenpunts 3 des in Fig. 1 dargestellten Achsträgers 1, bei dem auf einen durchgängig angeordneten Stab 2 zwei weitere Stäbe 2 treffen. Die Halbschale 4-1 ist entsprechend der vorgegebenen relativen Ausrichtung der Stäbe 2 zueinander gefertigt. Wie anhand der Pfeile in Fig. 3 veranschaulicht, können die Stäbe 2 zuerst relativ zueinander ausgerichtet werden und die Halbschale 4-1 danach auf die Enden bzw. Auflageabschnitte der Stäbe 2 aufgelegt und mittels nicht dargestellter Faserwicklungen befestigt werden. Andererseits kann auch zunächst beispielsweise der durchlaufende Stab 2 mit der Halbschale 4-1 mittels der Wicklungen 5 und ggf. mittels des Klebstoffs verbunden werden, und die Enden der beiden anderen Stäbe 2 anschließend in den dafür vorgesehenen Abschnitten der Halbschale 4-1 abgelegt und mit diesen verbunden werden.

Fig. 4 zeigt eine schematische Ansicht eines Knotenpunkts 3 in Form eines T-Stoßes des in Fig. 1 gezeigten Achsträgers 1. Im Unterschied zu den in den Fig. 2 und 3 gezeigten Halbschalen 4, sind bei der in Fig. 4 dargestellten Ausführungsform die Positionierungselemente 4 als Laschen ausgebildet, die ebenfalls mittels einer stoffschlüssigen Verbindung, beispielsweise eines Klebstoffs an den Stäben 2 befestigt sein können. Die Laschen können aus demselben Material wie die Halbschalen gebildet sein. Im Unterschied zu den Halbschalen bedecken die Laschen jeweils lediglich Abschnitte der Endabschnitte des ersten und des zweiten Stabs 2.

Ein erster Auflageabschnitt der ersten Lasche 4-1 wird mittels einer ersten Faserwicklung 5, die auf dem ersten Auflageabschnitt der ersten Lasche aufliegt, in Richtung eines entsprechenden Auflageabschnitts des ersten Stabs 2 gezogen wird, und ein zweiter Auflageabschnitt der ersten Lasche 4-1 wird mittels einer zweiten Faserwicklung 5, die auf dem zweiten Auflageabschnitt der ersten Lasche 4-1 aufliegt, in Richtung eines entsprechenden Auflageabschnitts des zweiten Stabs 2 gezogen. Der erste und der zweite Auflageabschnitt der ersten Lasche 4-1 sind durch einen gekrümmten Verbindungsabschnitt verbunden, der einen Winkel festlegt, den der erste und der zweite Stab 2 miteinander einschließen.

Ein erster Auflageabschnitt der zweiten Lasche 4-2 wird mittels einer dritten Faserwicklung 5, die auf dem ersten Auflageabschnitt der zweiten Lasche 4-2 aufliegt, in Richtung eines entsprechenden Auflageabschnitts des zweiten Stabs 2 gezogen, und ein zweiter Auflageabschnitt der zweiten Lasche 4-2 wird mittels der zweiten Faserwicklung 5, die auch auf dem zweiten Auflageabschnitt der zweiten Lasche 4-2 aufliegt, in Richtung eines entsprechenden Auflageabschnitts des zweiten Stabs 2 gezogen. Der erste und der zweite Auflageabschnitt der zweiten Lasche 4-2 sind durch einen gekrümmten Verbindungsabschnitt verbunden, dessen Krümmung in Abhängigkeit von der Krümmung des Verbindungsabschnitts der ersten Lasche 4-1 gewählt ist, um ebenso den Winkel festzulegen, den der erste und der zweite Stab 2 miteinander einschließen.

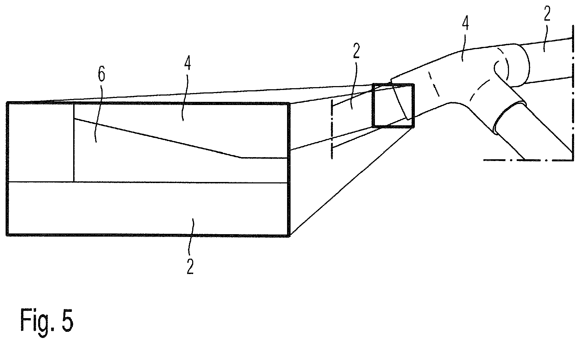

Fig. 5 zeigt eine Anordnung aus einem Positionierungselement 4, einem Klebstoff 6 und einem Stab 2 in Verbindung mit einem Längsschnitt entlang einer Längsrichtung des Stabs 2 gemäß einer Ausführungsform. Wie in Fig. 5 veranschaulicht, kann ein Endabschnitt des als Halbschale ausgebildeten Positionierungselements 4, der an einen freiliegenden Abschnitt des Stabs 2 anschließt, derart ausgebildet sein, dass ein Abstand zwischen der dem Stab 2 zugewandten Oberfläche des Positionierungselements 4 und dem Stab 2 in Richtung des anderen Endes des Positionierungselements 4 stetig bis zu einem im Wesentlichen konstanten Wert abnimmt. In anderen Ausführungsformen kann der Abstand zwischen der dem Stab 2 zugewandten Oberfläche des Positionierungselements 4 und dem Stab 2 in Richtung des anderen Endes des Positionierungselements 4 auch durch eine oder mehrere Abstufungen bis zu einem im Wesentlichen konstanten Wert abnehmen. Durch diese Anordnungen nimmt die Menge an Klebstoff 6, die zwischen dem Stab 2 und dem Positionierungselement 4 vorgesehen ist, in Richtung des anderen Endes des Positionierungselements 4 ab, wodurch Kerbwirkungen verbessert und Spitzenspannungen abgeschwächt werden können.

Zusätzlich oder alternativ dazu kann in einer nicht gezeigten Ausführungsform der Klebstoff 6 zum weiteren Abbau von Spitzenspannungen einen über das Ende des Positionierungselements 4 hinausragenden überstehenden Wulst umfassen.

Bevorzugt erfolgt das Anbringen der Faserwicklungen unter Verwendung einer von dem wbk Institut für Produktionstechnik des Karlsruher Instituts für Technologie entwickelten Wickelmaschine, die es erlaubt, die Faserwicklungen bei ruhenden Stäben und ruhenden Positionierungselement(en) abzulegen, d.h., dass die einzelnen Werkstücke nicht um eine Achse gedreht werden müssen. Durch Verwendung dieser Wickelmaschine können die Stäbe vorteilhaft in einem automatisierten Serienprozess verbunden werden.

## Patentansprüche

1. Trägerkonstruktion (1) in Fachwerkbauweise, umfassend einen ersten und einen zweiten Stab (2) eines Achsträgers eines Kraftfahrzeugs,
ein Positionierungselement (4), **dadurch gekennzeichnet, dass** die Trägerkonstruktion weiterhin umfasst:
eine erste und eine zweite Faserwicklung (5), wobei
das Positionierungselement (4) eine Ausrichtung des ersten Stabs relativ zu einer Ausrichtung des zweiten Stabs festlegt, und
ein erster Auflageabschnitt des Positionierungselements (4) durch die erste Faserwicklung in Richtung eines Auflageabschnitts des ersten Stabs gezogen wird, und ein zweiter Auflageabschnitt des Positionierungselements durch die zweite Faserwicklung in Richtung eines Auflageabschnitts des zweiten Stabs gezogen wird, um den ersten und den zweiten Stab in der festgelegten relativen Ausrichtung zueinander mittels Reibschluss zu haltern.

2. Trägerkonstruktion nach Anspruch 1, bei der der erste und der zweite Auflageabschnitt des Positionierungselements (4) eine jeweilige Führungseinrichtung aufweisen, durch welche die erste und die zweite Faserwicklung (4) jeweils geführt werden.

3. Trägerkonstruktion nach einem der vorangehenden Ansprüche, bei der der erste Auflageabschnitt des Positionierungselements an dem Auflageabschnitt des ersten Stabs und der zweite Auflageabschnitt des Positionierungselements an dem Auflageabschnitt des zweiten Stabs ferner mittels einer stoffschlüssigen Verbindung befestigt ist.

4. Trägerkonstruktion nach Anspruch 3, bei der die stoffschlüssigen Verbindungen durch jeweilige zwischen dem ersten Auflageabschnitt des Positionierungselements und dem Auflageabschnitt des ersten Stabs, und dem zweiten Auflageabschnitt des Positionierungselements und dem Auflageabschnitt des zweiten Stabs vorgesehene Klebstoffe (6) erfolgt.

5. Trägerkonstruktion nach Anspruch 4, bei der ein Abstand zwischen einem an einen freiliegenden Abschnitt des ersten Stabs (2) anschließenden Endabschnitts des Positionierungselements (4) in Richtung eines anderen Endabschnitts des Positionierungselements (4) stetig oder stufenweise bis zu einem im Wesentlichen konstanten Wert abnimmt.

6. Trägerkonstruktion nach Anspruch 4 oder 5, bei der im Anschluss an den Endabschnitt des Positionierungselements (4) ein überstehender, aus Klebstoff bestehender Wulst ausgebildet ist.

7. Trägerkonstruktion nach einem der vorangehenden Ansprüche, bei der das Positionierungselement (4) eine Halbschale (4-1, 4-2) aufweist, deren dem Auflageabschnitt des ersten Stabs (2) zugewandte Oberfläche auf dem Auflageabschnitt des ersten Stabs (2) formschlüssig aufliegt.

8. Trägerkonstruktion nach einem der Ansprüche 1 bis 6, bei der das Positionierungselement (4) als Lasche ausgebildet ist, und der erste Auflageabschnitt und der zweite Auflageabschnitt des Positionierungselements (4) durch einen gebogenen Abschnitt verbunden sind.

9. Trägerkonstruktion nach einem der vorangehenden Ansprüche, bei der die Faserwicklungen (5) zumindest eine Faser ausgewählt aus einer Kohlenstofffaser, einer Glasfaser, einer Aramidfaser und einer Naturfaser umfassen.

10. Trägerkonstruktion nach Anspruch 9, bei der die zumindest eine Faser in einen Matrixwerkstoff ausgewählt aus einem thermoplastischen Matrixwerkstoff und einem duroplastischen Matrixwerkstoff eingebettet ist.

11. Trägerkonstruktion nach einem der vorangehenden Ansprüche, bei der der erste Stab (2) und/oder der zweite Stab (2) einen faserverstärkten Kunststoff oder ein Metall umfassen.

12. Trägerkonstruktion nach einem der vorangehenden Ansprüche, bei der das Positionierungselement (4) aus einem Kunststoff, einem faserverstärkten Kunststoff oder aus einem Metall gebildet ist.

13. Verfahren zur Herstellung einer Trägerkonstruktion (1) in Fachwerkbauweise, umfassend
ein Anordnen eines ersten Auflageabschnitts eines Positionierungselements (4) auf einem Auflageabschnitt eines ersten Stabs (2) eines Achsträgers eines Kraftfahrzeugs,
ein Anordnen eines zweiten Auflageabschnitts des Positionierungselements (4) auf einem Auflageabschnitt eines zweiten Stabs (2) eines Achsträgers eines Kraftfahrzeugs,
Verbinden des ersten Auflageabschnitts des Positionierungselements mit dem Auflageabschnitt des ersten Stabs (2) durch eine Faserwicklung (5), welche den ersten Auflageabschnitt des Positionierungselements (4) in Richtung des Auflageabschnitts des ersten Stabs (2) zieht, und Verbinden des zweiten Auflageabschnitts des Positionierungselements mit dem Auflageabschnitt des zweiten Stabs (2) durch eine weitere Faserwicklung (5), welche den zweiten Auflageabschnitt des Positionierungselements (4) in Richtung des Auflageabschnitts des zweiten Stabs (2) zieht, um den ersten und den zweiten Stab (2) in einer festgelegten relativen Ausrichtung zueinander mittels Reibschluss zu haltern.

14. Verfahren nach Anspruch 13, bei der der erste und der zweite Auflageabschnitt des Positionierungselements (4) eine jeweilige Führungseinrichtung aufweisen, und Abschnitte der ersten und der zweiten Faserwicklung (4) jeweils in die entsprechende Führungseinrichtung eingelegt werden.

15. Verfahren nach einem der Ansprüche 13 oder 14, bei dem der erste Auflageabschnitt des Positionierungselements an dem Auflageabschnitt des ersten Stabs und der zweite Auflageabschnitt des Positionierungselements an dem Auflageabschnitt des zweiten Stabs ferner mittels einer stoffschlüssigen Verbindung befestigt werden.

16. Verfahren nach Anspruch 15, bei dem zur Herstellung der stoffschlüssigen Verbindungen jeweilige Klebstoffe (6) zwischen dem ersten Auflageabschnitt des Positionierungselements und dem Auflageabschnitt des ersten Stabs, und dem zweiten Auflageabschnitt des Positionierungselements und dem Auflageabschnitt des zweiten Stabs vorgesehen werden.

17. Verfahren nach Anspruch 16, bei der ein Abstand zwischen einem an einen freiliegenden Abschnitt des ersten Stabs (2) anschließenden Endabschnitts des Positionierungselements (4) in Richtung eines anderen Endabschnitts des Positionierungselements (4) stetig oder stufenweise bis zu einem im Wesentlichen konstanten Wert abnimmt.

18. Verfahren nach Anspruch 16 oder 17, bei dem im Anschluss an den Endabschnitt des Positionierungselements (4) ein überstehender, aus Klebstoff bestehender Wulst ausgebildet wird.

19. Verfahren nach einem der Ansprüche 13 bis 18, bei dem das Positionierungselement (4) als Halbschale (4-1, 4-2) ausgebildet wird, deren dem Auflageabschnitt des ersten Stabs (2) zugewandte Oberfläche auf dem Auflageabschnitt des ersten Stabs (2) formschlüssig aufgelegt wird.

20. Verfahren nach einem der Ansprüche 13 bis 18, bei dem das Positionierungselement (4) als Lasche ausgebildet wird, und der erste Auflageabschnitt und der zweite Auflageabschnitt des Positionierungselements (4) durch einen gebogenen Abschnitt verbunden sind.

21. Verfahren nach einem der Ansprüche 13 bis 20, bei der die Faserwicklungen (5) zumindest eine Faser ausgewählt aus einer Kohlenstofffaser, einer Glasfaser, einer Aramidfaser und einer Naturfaser umfassen.

22. Verfahren nach Anspruch 21, bei dem die zumindest eine Faser in einen Matrixwerkstoff ausgewählt aus einem thermoplastischen Matrixwerkstoff und einem duroplastischen Matrixwerkstoff eingebettet ist.

23. Verfahren nach einem der Ansprüche 13 bis 22, bei dem der erste Stab (2) und/oder der zweite Stab (2) einen faserverstärkten Kunststoff oder ein Metall umfassen.

24. Verfahren nach einem der Ansprüche 13 bis 23, bei der das Positionierungselement (4) aus einem Kunststoff, einem faserverstärkten Kunststoff oder aus einem Metall gebildet wird.

## Claims

1. A support structure (1) of latticework construction, comprising
a first and a second rod (2) of an axle support of a motor vehicle,
a positioning element (4), **characterised in that** the support structure furthermore comprises:
a first and a second fibre winding (5), wherein
the positioning element (4) defines an orientation of the first rod relative to an orientation of the second rod, and
a first bearing portion of the positioning element (4) is drawn by the first fibre winding in the direction of a bearing portion of the first rod, and a second bearing portion of the positioning element is drawn by the second fibre winding in the direction of a bearing portion of the second rod, in order to hold the first and the second rods in the defined orientation relative to each other by means of a frictional connection.

2. A support structure according to Claim 1, in which the first and the second bearing portion of the positioning element (4) have a respective guide means by which the first and the second fibre winding (4) are guided in each case.

3. A support structure according to one of the preceding claims, in which the first bearing portion of the positioning element is fastened to the bearing portion of the first rod and the second bearing portion of the positioning element is fastened to the bearing portion of the second rod additionally by means of a material-formed bond.

4. A support structure according to Claim 3, in which the material-formed bonds are realised by respective adhesives (6) provided between the first bearing portion of the positioning element and the bearing portion of the first rod, and between the second bearing portion of the positioning element and the bearing portion of the second rod.

5. A support structure according to Claim 4, in which a distance between an end portion of the positioning element (4) which adjoins an exposed portion of the first rod (2) in the direction of another end portion of the positioning element (4) decreases constantly or in steps down to a substantially constant value.

6. A support structure according to Claim 4 or Claim 5, in which a protruding bead comprising adhesive is formed adjoining the end portion of the positioning element (4).

7. A support structure according to one of the preceding claims, in which the positioning element (4) has a half-shell (4-1, 4-2), the surface of which which faces the bearing portion of the first rod (2) lies in a positive fit on the bearing portion of the first rod (2).

8. A support structure according to one of Claims 1 to 6, in which the positioning element (4) is formed as a tab, and the first bearing portion and the second bearing portion of the positioning element (4) are connected by a curved portion.

9. A support structure according to one of the preceding claims, in which the fibre windings (5) comprise at least one fibre selected from a carbon fibre, a glass fibre, an aramid fibre and a natural fibre.

10. A support structure according to Claim 9, in which the at least one fibre is embedded in a matrix material selected from a thermoplastic matrix material and a thermoset matrix material.

11. A support structure according to one of the preceding claims, in which the first rod (2) and/or the second rod (2) comprise a fibre-reinforced plastics material or a metal.

12. A support structure according to one of the preceding claims, in which the positioning element (4) is formed from a plastics material, a fibre-reinforced plastics material or from a metal.

13. A method for producing a support structure (1) of latticework construction, comprising
arranging a first bearing portion of a positioning element (4) on a bearing portion of a first rod (2) of an axle support of a motor vehicle,
arranging a second bearing portion of the positioning element (4) on a bearing portion of a second rod (2) of an axle support of a motor vehicle,
connecting the first bearing portion of the positioning element to the bearing portion of the first rod (2) by a fibre winding (5) which draws the first bearing portion of the positioning element (4) in the direction of the bearing portion of the first rod (2), and connecting the second bearing portion of the positioning element to the bearing portion of the second rod (2) by a further fibre winding (5) which draws the second bearing portion of the positioning element (4) in the direction of the bearing portion of the second rod (2), in order to hold the first and the second rods (2) in a defined orientation relative to each other by means of a frictional connection.

14. A method according to Claim 13, in which the first and the second bearing portion of the positioning element (4) have a respective guide means, and portions of the first and the second fibre winding (4) are placed in each case in the corresponding guide means.

15. A method according to one of Claims 13 or 14, in which the first bearing portion of the positioning element is fastened to the bearing portion of the first rod and the second bearing portion of the positioning element is fastened to the bearing portion of the second rod additionally by means of a material-formed bond.

16. A method according to Claim 15, in which to produce the material-formed bonds respective adhesives (6) are provided between the first bearing portion of the positioning element and the bearing portion of the first rod, and between the second bearing portion of the positioning element and the bearing portion of the second rod.

17. A method according to Claim 16, in which a distance between an end portion of the positioning element (4) which adjoins an exposed portion of the first rod (2) in the direction of another end portion of the positioning element (4) decreases constantly or in steps down to a substantially constant value.

18. A method according to Claim 16 or Claim 17, in which a protruding bead comprising adhesive is formed adjoining the end portion of the positioning element (4).

19. A method according to one of Claims 13 to 18, in which the positioning element (4) is formed as a half-shell (4-1, 4-2), the surface of which which faces the bearing portion of the first rod (2) is placed in a positive fit on the bearing portion of the first rod (2).

20. A method according to one of Claims 13 to 18, in which the positioning element (4) is formed as a tab, and the first bearing portion and the second bearing portion of the positioning element (4) are connected by a curved portion.

21. A method according to one of Claims 13 to 20, in which the fibre windings (5) comprise at least one fibre selected from a carbon fibre, a glass fibre, an aramid fibre and a natural fibre.

22. A method according to Claim 21, in which the at least one fibre is embedded in a matrix material selected from a thermoplastic matrix material and a thermoset matrix material.

23. A method according to one of Claims 13 to 22, in which the first rod (2) and/or the second rod (2) comprise a fibre-reinforced plastics material or a metal.

24. A method according to one of Claims 13 to 23, in which the positioning element (4) is formed from a plastics material, a fibre-reinforced plastics material or from a metal.

## Revendications

1. Construction porteuse (1) en treillis comprenant :
une première barre et une seconde barre (2) d'un support d'essieu d'un véhicule,
un élément de positionnement (4),
**caractérisée en ce qu'**elle comprend en outre :
un premier et un second enroulements de fibres (5), l'élément de positionnement (4) fixant l'orientation de la première barre par rapport à l'orientation de la seconde barre, et
un premier segment d'appui de l'élément de positionnement (4) étant tiré par le premier enroulement de fibres en direction d'un segment d'appui de la première barre, et un second segment d'appui de l'élément de positionnement étant tiré par le second enroulement de fibres dans la direction d'un segment d'appui de la seconde barre de façon à maintenir par une liaison par friction, la première barre et la seconde barre dans l'orientation relative fixée l'une par rapport à l'autre.

2. Construction porteuse conforme à la revendication 1,
dans laquelle le premier et le second segments d'appui de l'élément de positionnement (4) comportent un dispositif de guidage respectif par l'intermédiaire duquel le premier et le second enroulements de fibres (4) sont respectivement guidés.

3. Construction porteuse conforme à l'une des revendications précédentes,
dans laquelle le premier segment d'appui de l'élément de positionnement est en outre fixé par une liaison par la matière sur le segment d'appui de la première barre et le second segment d'appui de l'élément de positionnement est fixé en outre par une liaison par la matière sur le segment d'appui de la seconde barre.

4. Construction porteuse conforme à la revendication 3,
dans laquelle la liaison par la matière s'effectue au moyen d'une colle (6) respectivement prévue entre le premier segment d'appui de l'élément de positionnement et le segment d'appui de la première barre et le second segment d'appui de l'élément de positionnement et le segment d'appui de la seconde barre.

5. Construction porteuse conforme à la revendication 4,
dans laquelle la distance d'un segment d'extrémité de l'élément de positionnement (4) se connectant à un segment libre de la première barre (2) en direction d'un autre segment d'extrémité de l'élément de positionnement (4) diminue de manière continue ou par paliers jusqu'à une valeur essentiellement constante.

6. Construction porteuse conforme à la revendication 4 ou 5,
dans laquelle à la suite du segment d'extrémité de l'élément de positionnement (4) est formé un bourrelet en saillie constitué de colle.

7. Construction porteuse conforme à l'une des revendications précédentes,
dans laquelle l'élément de positionnement (4) comprend une demi-coque (4-1, 4-2) dont la surface tournée vers le segment d'appui de la première barre (2) s'applique par une liaison par la forme sur le segment d'appui de la seconde barre (2).

8. Construction porteuse conforme à l'une des revendications 1 à 6,
dans laquelle l'élément de positionnement (4) est réalisé sous la forme d'un collier de serrage, et le premier segment d'appui et le second segment d'appui de l'élément de positionnement (4) sont reliés par un segment cintré.

9. Construction porteuse conforme à l'une des revendications précédentes,
dans laquelle les enroulements de fibres (5) renferment au moins une fibre choisie dans le groupe constitué par une fibre de carbone, une fibre de verre, une fibre d'aramide et une fibre naturelle.

10. Construction porteuse conforme à la revendication 9,
dans laquelle la fibre est enrobée dans un matériau formant matrice choisi parmi un matériau formant matrice thermoplastique et un matériau formant matrice thermodurcissable.

11. Construction porteuse conforme à l'une des revendications précédente,
dans laquelle la première barre (2) et/ou la seconde barre (2) renferment) un matériau synthétique renforcé par des fibres ou un métal.

12. Construction porteuse conforme à l'une des revendications précédente,
dans laquelle l'élément de positionnement (4) est réalisé en un matériau synthétique, en un matériau synthétique renforcé par des fibres ou en un métal.

13. Procédé d'obtention d'une construction porteuse (1) en treillis comprenant des étapes consistant à :
mettre en place un premier segment d'appui d'un élément de positionnement (4) sur un segment d'appui d'une première barre (2) d'un support d'essieu d'un véhicule automobile,
mettre en place un second segment d'appui de l'élément de positionnement (4) sur un segment d'appui d'une seconde barre (2) d'un support d'essieu d'un véhicule automobile,
relier le premier segment d'appui de l'élément de positionnement au segment d'appui de la première barre (2) par un enroulement de fibres (5) qui tire le premier segment d'appui de l'élément de positionnement (4) en direction du segment d'appui de la première barre (2), et relier le second segment d'appui de l'élément de positionnement au segment d'appui de la seconde barre (2) par un autre enroulement de fibres (5) qui tire le second segment d'appui de l'élément de positionnement (4) en direction du segment d'appui de la seconde barre (2) de façon à maintenir la première barre et la seconde barre (2) dans une orientation relative fixée l'une par rapport à l'autre par liaison par friction.

14. Procédé conforme à la revendication 13, selon lequel le premier et le second segments d'appui de l'élément de positionnement (4) comportent un dispositif de guidage respectif, et des segments du premier et du second enroulements (4) sont respectivement insérés dans le dispositif de guidage correspondant.

15. Procédé conforme à l'une des revendications 13 et 14, selon lequel le premier segment d'appui de l'élément de positionnement est en outre fixé par une liaison par la matière sur le segment d'appui de la première barre et le second segment d'appui de l'élément de positionnement est en outre fixé par une liaison par la matière sur le segment d'appui de la seconde barre.

16. Procédé conforme à la revendication 15, selon lequel, pour obtenir les liaisons par la matière, des adhésifs (6) sont respectivement prévus entre le premier segment d'appui de l'élément de positionnement et le segment d'appui de la première barre et entre le second segment d'appui de l'élément de positionnement et le segment d'appui de la seconde barre.

17. Procédé conforme à la revendication 16, selon lequel, la distance d'un segment d'extrémité de l'élément de positionnement (4) se connectant à un segment libre de la première barre (2) en direction d'un autre segment d'extrémité de l'élément de positionnement (4) diminue de manière continue ou par paliers jusqu'à une valeur essentiellement constante.

18. Procédé conforme à la revendication 16 ou 17, selon lequel, à la suite du segment d'extrémité de l'élément de positionnement (4) est formé un bourrelet en saillie réalisé en colle.

19. Procédé conforme à l'une des revendications 13 à 18, selon lequel l'élément de positionnement (4) est réalisé sous la forme d'une demi-coque (4-1, 4-2) dont la surface tournée vers le segment d'appui de la première barre (2) s'applique sur le segment d'appui de la première barre (2) par une liaison par la forme.

20. Procédé conforme à l'une des revendications 13 à 18, selon lequel l'élément de positionnement (4) est réalisé sous la forme d'un collier de serrage et le premier segment d'appui et le second segment d'appui de l'élément de positionnement (4) sont reliés par un segment cintré.

21. Procédé conforme à l'une des revendications 13 à 20, selon lequel les enroulements de fibres (5) renferment au moins une fibre choisie parmi une fibre de carbone, une fibre de verre, une fibre d'aramide et une fibre naturelle.

22. Procédé conforme à la revendication 21, selon lequel la fibre est enrobée dans un matériau formant matrice choisi parmi un matériau formant matrice thermoplastique et un matériau formant matrice thermodurcissable.

23. Procédé conforme à l'une des revendications 13 à 22, selon lequel la première barre (2) et/ou la première barre (2) renferme(nt) un matériau synthétique renforcé par des fibres ou un métal.

24. Procédé conforme à l'une des revendications 13 à 23, selon lequel l'élément de positionnement (4) est réalisé en un matériau synthétique, en un matériau synthétique renforcé par des fibres, ou en un métal.
